# EUROPEAN PATENT APPLICATION

(11) **EP 4 835 835 A1**
(43) Date of publication of application: **04.11.2026**
(21) Application number: 25382442.9
(22) Date of filing: 30.04.2025
(51) Int. Cl.: G06V 10/44, G06V 10/82, G06V 40/16

(54) **COMPUTER-IMPLEMENTED METHOD FOR DETERMINING AN OCCLUSION IN AN IMAGE**

(71) Applicant: Identy Inc., Dover, DE 19901 (US)
(72) Inventor: Erro Eslava, Daniel, Madrid (ES); Garcia Gomar, Marta, Madrid (ES)
(74) Representative: Grünecker Patent- und Rechtsanwälte PartG mbB

(57) **Abstract**

Computer-implemented method for determining an occlusion in an image, comprising the steps:
Obtaining the image, wherein the image comprises a biometric feature;
Processing the image by a neural network, wherein the neural network comprises a plurality of convolutional layers;
Obtaining a heatmap from an intermediate output of the neural network, wherein the intermediate output is obtained after one of the convolutional layers;
Determining an occlusion based on the heatmap;
Providing an output based on the determined occlusion, wherein if the output indicates that at least part of the biometric feature is occluded, rejecting the image as invalid and/or providing information to a user that the image comprises occlusion.

## Description

The present invention relates to a computer-implemented method for determining an occlusion in an image according to independent claim 1 and a computing device according to independent claim 14.

### Prior art

In the prior art it is known to verify, before using an image for an identification process, as to whether a quality of the image is suitable for being used in the identification process. Specifically, it may be verified as to whether the image is too bright or too dark or whether certain biometric features, such as a nose, an eye or a mouth are not visible in the image. Such occlusion of biometric features can, for instance, be present when the user wears glasses, a scarf or a hat.

Should it be identified that certain parts of the face, such as biometric features comprised in the face, are occluded, a system on which the identification method may be carried out may warn the respective user and provide a request to the user to retake the image or to provide an image with sufficient quality for the identification process.

Disadvantageously, the respective methods known in the prior art are based on dedicated face part segmentation models, which require dedicated computational resources and are therefore typically not suitable for being carried out on mobile computing devices, such as a smartphone or a tablet.

### Problem

Starting from the known prior art, the objective of the present invention is to provide a computer-implemented method that can determine occlusions in images more efficiently and be furthermore implemented on mobile computing devices.

### Solution

This problem is solved by the computer-implemented method for determining an occlusion in an image according to independent claim 1 and the computing device according to independent claim 14. Preferred embodiments are provided in the dependent claims.

The computer-implemented method according to the invention is provided for determining an occlusion in an image and comprises the steps:
Obtaining the image, wherein the image comprises a biometric feature;
Processing the image by a neural network, wherein the neural network comprises a plurality of convolutional layers;
Obtaining a heatmap from an intermediate output of the neural network, wherein the intermediate output is obtained after one of the convolutional layers;
Determining an occlusion based on the heatmap;
Providing an output based on the determined occlusion, wherein if the output indicates that at least part of the biometric feature is occluded, rejecting the image as invalid and/or providing information to a user that the image comprises occlusion.

The occlusion in the image can mean that at least part of an object in the image is at least partially covered by another object and is therefore not visible in the image. An occlusion in the image can, however, also mean that at least part of an object in the image is not visible due to any other cause besides the other object covering at least part of the object in the image. Such other cause, can, for instance, be a shadow of another object occluding the object or sunlight or light of any other light source being radiated into an optical sensor by means of which the image is taken, such that at least part of the object in the image is being occluded.

Obtaining the image can comprise obtaining at least one image. This can, for instance, comprise obtaining a single image or a number of images larger than two. Is a number of images larger than two obtained, the images can be obtained in specific time intervals. The number of images can, however, also be obtained in different time intervals. It is also conceivable that the number of images corresponds to a video.

The biometric feature can be any biometric feature that allows for identifying a user. The biometric feature can, for instance, be a face or a part of a face, such as an eye, an iris or any other part of the face that is suitable for identifying a user. The biometric feature can also be a hand or a part of the hand, such as a palm, a palm print, a finger or thumb, a fingerprint or thumbprint or any other part of the hand that allows for identifying a user. The biometric feature may also be a foot or any part of a foot, such as a sole, soleprint, a toe or a toeprint.

That the image comprises a biometric feature can mean that the image comprises at least part of the biometric feature. This can mean that the image does not necessarily have to comprise the biometric feature in its entirety, but can also comprise part of the biometric feature, such as part of a hand, part of a foot or part of a face.

Obtaining the image comprising a biometric feature can, for instance, comprise obtaining the image from an optical sensor, such as a camera, or a memory of a computing device. The computing device can, for instance, be a mobile computing device, such as a smartphone or a tablet. It can, for instance, be provided that the computing device is the device on which the computer-implemented method is being performed. However, the image may also be received from a provider computing device that is different from the computing device on which the method is being carried out. The provider computing device can comprise an optical sensor, such as a camera, for taking the image. In this case, it can be provided that the provider computing device is another mobile computing device or a stationary computing device including an optical sensor. It is, however, also possible that the provider computing device does not comprise an optical sensor and that the image is being stored on a memory device of the provider computing device. In this case, the provider computing device can, for instance, be a server computer. The computing device and the provider computing device can be in communication with each other, which can mean that the computing device and the provider computing device are connected by a wireless or cable connection.

Optionally, the neural network can comprise, besides the plurality of convolutional layers, at least one fully connected layer. It can, for instance, be provided that the last layer of the neural network is a fully connected layer and that the layers preceding the fully connected layer are convolutional layers. The fully connected layer, however, does not necessarily have to be the last layer of the neural network and can also be any other layer of the neural network.

Optionally, it can also be provided that after at least one of the convolutional layers, a batch normalizer and a rectified linear unit are arranged. In this case, it can be provided that the intermediate output is obtained after a unit comprising a convolutional layer, a batch normalizer and a rectified linear unit. For instance, it can be provided that the intermediate output is obtained after the rectified linear unit.

The heatmap can be a map of the image that highlights certain parts of the image, such as certain pixels of the image, over remaining parts of the image, such as the remaining pixels of the image. The highlighted parts can, for instance, be highlighted by a certain color, a range of certain colors or be labelled with a respective label. It is also conceivable that the highlighted parts of the image are confined in a box or any other suitable geometric form. The heatmap can, for instance, highlight biometric features in the image.

By determining a heatmap after one of the convolutional layers and determining the occlusion based on the heatmap, the process of identifying occlusions in images can be made more efficient, as the computational complexity of the process can be reduced. This makes the computer-implemented method according to the invention particularly suitable for being executed on mobile computing devices with limited computational resources. Furthermore, information that is already present in the network layers can be leveraged, which also contributes to the efficiency of the process.

In an embodiment, it can be provided that the biometric feature is a face or a part of a face, a hand or a part of hand or a foot or a part of a foot. With this, the method can be flexibly used to determine occlusions for a number of different biometric features.

It can furthermore be provided that the heatmap is determined based on Gradient-weighted Class Activation Mapping. Gradient-weighted Class Activation Mapping is a particularly suitable approach for determining which part of an image activates an output of a convolutional neural network. In addition, by designing the neural network's output conveniently, Gradient-weighted Class Activation Mapping allows for determining objects in an image that allow for distinguishing the image with respect to other images comprising similar objects. Gradient-weighted Class Activation Mapping is therefore a particularly suitable approach for highlighting biometric features in a heatmap, as these features activate the output of the employed neural network and are used for distinguishing between users in authentication processes. In case a biometric feature is occluded, no activation of the respective part of the image is present in the respective heatmap, indicating that a biometric feature at the respective position in the image is occluded.

In a further development of the previous embodiment, the neural network is a trained neural network wherein the neural network is trained to convert the biometric feature into an embedding, wherein after the training of the neural network, weights *w_{c}* of a number c of channels of a convolutional layer of the neural network are determined. Before determining the weights of the number of channels of the neural network, the trained neural network can be frozen and the weights *w_{c}* can be determined in a training process that is separate from the training process of the neural network for converting an image into an embedding. Embeddings are a particularly suitable representation for biometric features and can have a format that can be efficiently processed by matchers within verification and identification systems..

In a further development of the previous embodiment, determining the weights *w_{c}* comprises applying the Gradient-weighted Class Activation Mapping to a scalar determined based on at least one input image comprising a biometric feature and on a number of *N* reference images comprising the biometric feature and no occlusion. The input image may also comprise no occlusions. By applying Gradient-weighted Class Activation Mapping to the scalar, the weights of the *C* channels of the most suitable convolutional layer {*w_{c}*}_{*c=*1}*,...,_{C}* for determining biometric features can be obtained. {*w_{c}*}_{*c=*1}*,...,_{C}* thereby denotes a vector comprising the weights *w_{c}* of the *C* channels of a convolutional layer. The number of reference images *N* can be flexibly chosen. *N* may, for instance, be larger than 10, larger than 100 or larger than 1000 or take any other suitable number. By increasing the number of reference images, the quality of the determined dissimilarity score can be increased.

In a further development of the previous embodiment, determining the scalar comprises calculating a dot product between an embedding of the at least one input image and an embedding of at least one of the number of *N* reference images to obtain at least one similarity score, averaging the at least one similarity score and multiplying the averaged similarity score by -1 to obtain a dissimilarity score. Generally, the dot product between two embeddings yields a cosine similarity of the two embeddings, which generally ranges from -1 to 1. Thereby, a cosine similarity of -1 can indicate that the embeddings (i.e. the vectors that describe the embeddings) are opposite, while a cosine similarity of 1 can indicate that the embeddings (i.e. the vectors that describe the embeddings) are equal. Consequently, a dissimilarity score of 1 can indicate that the embeddings are opposite and a dissimilarity score of -1 can indicate that the embeddings are equal. The dissimilarity score is therefore a particularly suitable metric to derive a dissimilarity between two embeddings and therefore to quantify differences between images or specific parts of images.

In a further development of the previous embodiment, an average channel weight {*ŵ_{c}*} is determined by averaging over a number of *M* weights {*w_{c}*} determined for a number of *M* input images. Since the weights of the channels are essentially consistent across different biometric features of a specific type of biometric feature, such as across faces, across hands, or across feet, determination of an average channel weight {*ŵ_{c}*} is justified. {*ŵ_{c}*} thereby denotes a vector {*ŵ_{c}*}_{*c*=1,...,*C*} that comprises the average weights *ŵ_{c}* for the *C* channels of the chosen convolutional layer.

In a further development of the previous embodiment, the heatmap ***Ĥ*** is obtained based on the average channel weights {*ŵ_{c}*} and the content of a channel ***O**_{c}* based on the relation ***Ĥ*** *=* max(*ŵ*₁***O***₁+ ... *+ŵ_{c}**O**_{c},* 0). Optionally, the just mentioned max(*ŵ*₁***O***₁+ ... *+ŵ_{c}**O**_{c},* 0) operation can be formulated by using a rectified linear unit activation function ReLU, as ReLU(max(*ŵ*₁***O***₁+ ... *+ŵ_{c}**O**_{c}*)*.* The heatmap ***Ĥ*** and the content of a channel ***O***_{c} can have the form of a matrix. By obtaining the heatmap based on the average channel weight, backpropagation, meaning that the Gradient-weighted Class Activation Mapping needs to backpropagate from the scalar output to a specific convolutional layer to determine the weights {*w_{c}*} during the process of determining a heat of an image comprising an occlusion, can be avoided.

In an embodiment, the heatmap ***Ĥ*** is obtained without using backpropagation. By obtaining the heatmap without backpropagation, the computer-implemented method can be performed in interference mode making it applicable in a production environment

It can also be provided that determining the occlusion comprises determining a level of occlusion based on at least one trained binary classifier, wherein the trained binary classifier is trained based on at least one training image comprising a non-occluded biometric feature and at least one training image comprising an occluded biometric feature. Due to the low dimensionality of the heatmap matrix ***Ĥ***, a relatively small number of training images for specific occlusions, such as an example of an occlusion of a face, an example of an occlusion of a hand, or an example of an occlusion of a foot are sufficient to train the binary classifiers. Training of the binary classifiers can thereby be managed efficiently.

In a further development of the previous embodiment, it can be provided that the at least one binary classifier determines the level of occlusion of a part of the biometric feature as ***P***_{Occlusion} = sigmoid(Σ(***A*** ⊗ ***Ĥ***) + *b*), where ⊗ denotes the element-wise product, ***A*** is a trained matrix having the same size as ***Ĥ*** and *b* is a trained bias term. With a respective binary classifier, a precise determination of an occlusion level can be achieved.

It can furthermore be provided that ***A*** and *b* are trained by minimizing the binary cross-entropy of ***P***_{Occlusion} with respect to a binary occlusion label of at least one test image, wherein the binary classifiers are applied to the heatmap to determine occlusion probabilities for each classifier. As the related classifiers can be expressed by means of simple tensor operators of small size, the occlusion levels can be determined with reduced computational load, making the classifiers particularly suitable for being implemented on mobile devices.

In an embodiment, the binary classifiers are trained for a biometric feature of a face, such as a left eye, a right eye, a nose, a mouth, a left side of the face, a right side of the face, a top part of a face or a bottom part of a face, for a biometric characteristic of a hand, such as a palm print or a fingerprint, or for a biometric characteristic of a foot, such as a footprint or a toeprint. With this, specific implementations of binary classifiers are provided.

The computing device according to the invention comprises a processor, a memory device and an image sensor, wherein computer readable instructions are stored on the memory device, which when executed cause the computing device to perform the method according to any of the preceding embodiments of the method. With this, a computing device can be provided for performing the computer-implemented method according to any of the preceding embodiments.

In a further development of the previous embodiment, the computing device is a mobile computing device. As the computer-implemented method allows for determining a level of occlusion with relatively low computational load, mobile computing devices can efficiently perform the computer-implemented method according to the embodiments of the computer-implemented method described above.

### Brief description of the drawings

- Fig. 1:: Computer-implemented method for determining an occlusion in an image according to an embodiment
- Fig. 2:: Determination process for weights of a convolutional layer by using Gradient-weighted Class Activation Mapping
- Fig. 3:: Computer-implemented method for determining levels of occlusion in an image according to an embodiment
- Fig. 4:: Computing device according to an embodiment

### Detailed description of the drawings

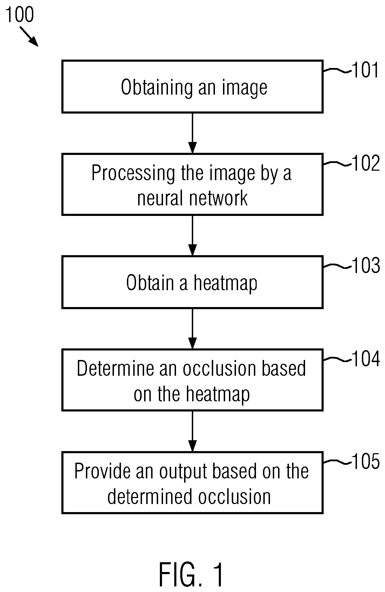

Fig. 1 shows a computer-implemented method 100 for determining an occlusion in an image according to an embodiment.

The computer-implemented method 100 can be carried out on a computing device. The computing device can, for instance, be a stationary computing device or a mobile computing device, such as a smartphone or a tablet.

It is conceivable that all steps of the computer-implemented method are performed on the computing device. In this case, it is not necessary for the computing device to be connected to another computing device for carrying out the method. A data connection between the computing device and another device, such as a server computer can, however, also be present.

Alternatively, it is also conceivable that a number of steps of the computer-implemented method 100 are performed on the computing device and that a number of steps of the computer-implemented method are performed on another remote computing device. The remote computing device may be in data communication with the computing device by means of a data connection, such as a cable or a wireless connection.

In a first step 101 of the computer-implemented method 100, an image is obtained, wherein the image comprises a biometric feature.

The image can be a single image or a number of images. In case a number of images is obtained, it is conceivable that the number of images constitutes a video.

The biometric feature can be any biometric feature that allows for identifying a user in an identification process. For instance, the biometric feature can be a face, a foot or a hand. It is also conceivable that the biometric feature is a biometric feature comprised in a face, a foot or a hand, such as an iris, a fingerprint or a toeprint.

After obtaining the image in step 101, in step 102 the image is processed by a neural network, wherein the neural network comprises a plurality of convolutional layers.

Before the image is processed by the neural network, the image can optionally be preprocessed. The optional preprocessing may comprise cropping and aligning the biometric feature comprised in the image, such that only the cropped and aligned biometric feature can be provided to the neural network. Preprocessing the image can also comprise resizing the image and/or normalizing the input range, such as normalizing the input range to range from [0, 255] to [-1, 1]. Furthermore, it can be provided that the image is transformed into a black and white image. The just mentioned preprocessing steps are to be considered exemplary. Also, any other suitable preprocessing steps may be performed.

It can be provided that the neural network comprises, besides the plurality of convolutional layers, a fully connected layer. The fully connected layer can be the last layer of the neural network.

It can furthermore be provided that, after at least one of the convolutional layers of the neural network, a batch normalizer and a rectified linear are arranged. Thereby the batch normalizer can be arranged after the convolutional layer and the rectified linear unit can be arranged after the batch normalizer.

The above discussed embodiment of the neural network, where the neural network comprises a fully connected layer or where the fully connected layer is the last layer, is to be considered exemplary. It is also conceivable that the fully connected layer is arranged at any other position within the structure of the neural network. Furthermore, the neural network does not necessarily have to comprise a fully connected layer, but can also comprise besides the plurality of convolutional layers any other suitable layer. Also, the arrangement of a batch normalizer and a rectified linear unit after at least one of the plurality of convolutional layers is to be considered exemplary.

The neural network can be a trained neural network. For the training, a dataset comprising a plurality of images from a number of identities may be used. During training, the neural network can be extended with a classification head. The resulting neural network can learn to predict the probability of each identity given the input, using classification losses such as cross-entropy, CosFace, ArcFace, AdaFace, etc. After training, the classification head can be removed from the neural network and the vectors produced by the neural network can convey relevant identityrelated info.

Specifically, the neural network can be an embedding neural network that may be trained to convert at least one biometric feature comprised in an image, such as a face or part of a face, a hand or part of a hand, or foot or a part of a foot into an embedding. By converting the biometric feature comprised in the image into an embedding, a vector representation of the biometric feature can be generated, which provides a basis for the determination of the occlusion in the image. Embeddings can be particularly well handled by neural networks.

In the following step 103, a heatmap ***Ĥ*** is obtained from an intermediate output of the neural network, wherein the intermediate output is obtained after one of the convolutional layers.

Obtaining the heatmap after one of the convolutional layers can comprise that the intermediate output is obtained directly after one of the convolutional layers or that the intermediate output is obtained after a unit that is arranged after a convolutional layer.

In case a batch normalizer and a rectified linear unit are arranged after a convolutional layer, it can, for instance, be provided that the intermediate output is obtained after a unit comprising a convolutional layer, a batch normalizer and a rectified linear unit. In this case, the intermediate output can, for instance, be obtained after the rectified linear unit, which is arranged after the batch normalizer and the convolutional layer.

It can furthermore be provided that the intermediate output is determined after a chosen convolutional layer that is most suitable for determining biometric features within an image. This chosen convolutional layer can be the last convolutional layer of the neural network. This particular choice of the specific convolutional layer is to be considered exemplary and not limiting. The chosen layer can also be the last layer that has a spatial resolution high enough to distinguish the position of eyes, of a mouth, of a nose, etc. To determine whether the resolution of a layer is high enough, the resolution of the layer can be compared to a threshold reference resolution, such as a tensor of 7 x 7, a tensor of 10 x 10 or any other tensor with a suitable resolution. Also, any other convolutional layer of the neural network can be specified as the chosen convolutional layer.

In an embodiment, it can be provided that the heatmap is determined based on Gradient-weighted Class Activation Mapping. That the heatmap is determined based on Gradient weighted Class Activation Mapping can mean that the heatmap is determined based on the principles of Gradient-weighted Class Activation Mapping. In an embodiment, it can be provided that the heatmap is determined based on the principles of Gradient-weighted Class Activation Mapping without backpropagation. By omitting the backpropagation, the computer-implemented method can also be employed in interference mode in a production environment, where backpropagation capabilities are generally not available.

To facilitate the determination of occlusions without backpropagation, in an additional training process, where the neural network trained for converting biometric features into embeddings is frozen, weights *w_{c}* of *C* channels of the above-mentioned chosen convolutional layer can be determined by Gradient-Weighted Class Activation based on a number of *M* input images and a number of *N* reference images. The weights of the *C* channels {*w_{c}*}_{*c=*1*,...,C*} determined for each of the number of *M* input images can then be averaged to determine averaged weights {*ŵ_{c}*}_{*c=*1}*_{,..,C}.*

These averaged weights {*ŵ_{c}*} can be kept fixed in the following and used for the determination of the heatmap based on the Gradient-weighted Class Activation Mapping. As the averaged fixed weights are used by the Gradient-weighted Class Activation Mapping, backpropagation can be completely avoided for the determination of the heatmap.

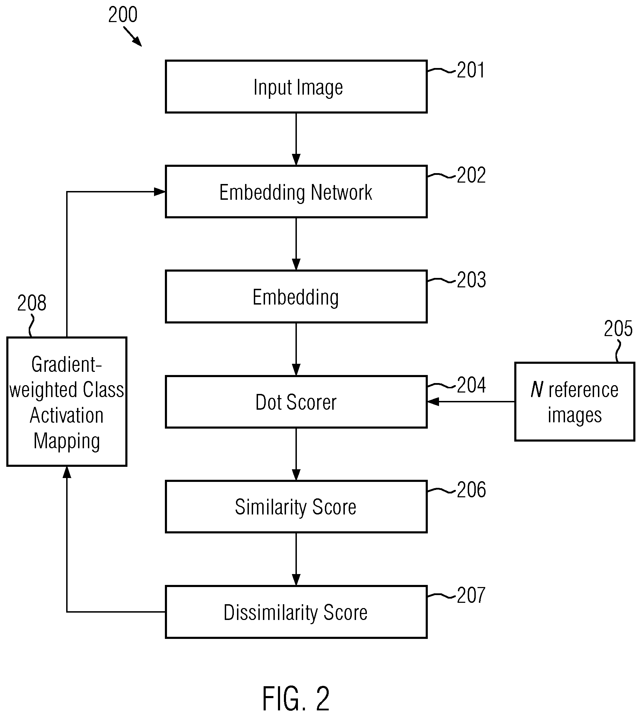

The above generally described process of determining the average weights {*ŵ_{c}*} for a chosen convolutional layer is described in more detail in the context of Fig. 2.

Afterwards, in step 104, an occlusion is determined based on the heatmap ***Ĥ***.

Determining an occlusion can, for instance, comprise determining whether the image or the biometric feature comprised in the image comprises an occlusion or not.

Determining an occlusion can, however, also comprise determining and specifying a type of occlusion. This can, for instance, comprise determining which specific part of an image or of the biometric feature comprised in the image is occluded.

It is also conceivable that a level of occlusion is determined. This can comprise that levels of occlusions for different parts of the biometric feature are determined. In case the biometric feature is a face, determining a level of occlusion can, for instance, comprise determining a level of occlusion of eyes comprised in the face, determining a level of occlusion of a nose comprised in the face and/or a level of occlusion of a mouth comprised in the face.

In step 105, based on the determined occlusion, an output is provided. If it is only determined whether the images or the biometric feature comprised in the image comprise an occlusion or not, the output can be binary. If a level of occlusion is determined for the image, for the biometric feature comprised in the image or for different parts of the biometric feature comprised in the image, the level of occlusion may be provided in the form of an occlusion probability. If occlusion probabilities for different parts of the biometric feature are provided, the occlusion probabilities can be provided in a vector representation.

If the output indicates that at least part of the biometric feature is occluded, the image is rejected as invalid and/or information is provided to a user that the image comprises an occlusion. By rejecting the image as invalid or by providing information to a user that the image comprises an occlusion, images that may not qualify due to the presence of occlusions for identification purposes may be identified. With this, the security of an identification process and specifically a possible identification of user based on occluded images can be effectively prevented.

That at least part of the biometric feature is occluded can mean that at least a specific fraction of the image or a specified fraction of the biometric identifier is occluded. Optionally, it can therefore be provided that the output is compared to a threshold value for determining whether at least part of the image is occluded.

If the output indicates that the biometric feature is not occluded or that the occluded part of the biometric feature is below a threshold, the image may be evaluated as suitable and can be used in further processes, such as in an identification process of a user.

Fig. 2 shows a more specific embodiment 200 for determining weights of a number of channels of a convolutional layer by using Gradient-weighted Class Activation Mapping.

For determining the weights of the convolutional layer, in step 201 an input image can be obtained. The input image can comprise at least one biometric feature. It can furthermore be provided that the input image does not comprise an occlusion. The input image may be a specific image that is only used for the determination of the weights of the layers of the channels of a convolutional neural network.

In a subsequent step 202, the input image is processed by an embedding neural network 202. As already discussed in the context of Fig. 1, the embedding neural network can comprise a plurality of convolutional layers. With respect to specific implementations of the embedding neural network, reference is made to the embodiment of Fig. 1, where this has already been described in detail. Also with respect to possible preprocessing steps, which may be performed on the input image before providing the same to the embedding neural network, reference is made to the embodiment of Fig. 1.

After the input image has been processed by the embedding neural network 202, the embedding neural network can output and embedding 203. This embedding can be a vector representation of the input image or a biometric feature comprised in the input image, which is a particularly suitable representation for further processing the biometric feature.

In step 204, the embedding can be provided to a dot scorer 204, which calculates a dot product between the embedding of the input image or the biometric feature comprised in the input image and the embeddings of a number of N reference images 205, which correspond to a representative population of faces. N can, for , be larger than 10, larger than 100 or larger than 1000 or take any other value. The *N* reference images can comprise a biometric feature and no occlusion. By calculating the dot product between the input image and the *N* reference images, *N* scores can be obtained. Each of the *N* scores can thereby constitute a cosine similarity score, which can take values in the range [-1;1]. A cosine similarity score of -1 can indicate that the two embeddings, i.e. the vector representation of the input image or the biometric feature comprised in the input image and the vector representation of one of the *N* reference images, based on which the cosine similarity score was calculated, are opposite. A cosine similarity score of 1 can indicate that the two embeddings, i.e. the two vector representations of which the cosine similarity score was calculated, are equal. The similarity score is therefore a suitable metric for quantifying a similarity between input image and reference image.

Subsequently, an average of the *N* scores can be calculated by summing up the similarity scores calculated for the input image and the *N* reference images and by normalizing the sum by *N.* This in turn yields a global similarity score 206. By multiplying this global similarity score by -1, a global dissimilarity score 207 can be obtained. This global dissimilarity score 207 describes a dissimilarity between the embedding of the input image and the *N* embeddings of the *N* reference images.

As the thus-obtained global dissimilarity score is a scalar, Gradient-weighted Class Activation Mapping can be applied 208 to this scalar. By applying Gradient-Weighted Class Activation Mapping to this scalar, eventually a heatmap can be derived indicating to which extent the different parts of the input image provided to the embedding neural network contribute to the determined score.

Before deriving the heatmap, by applying Gradient-Weighted Class Activation Mapping to the global dissimilarity score, the weights *w_{c}* for a number of *C* channels of a most suitable convolutional layer for determining the relevant biometric features are determined. Thereby, a higher weight can be assigned to channels that point to relevant biometric features, while a lower weight can be assigned to channels that do not point towards relevant biometric features. In the case of a face, these relevant channels can be channels that point towards a mouth, an eye, a nose or an ear. In the case of a hand, these relevant channels can be channels that point towards a finger or a thumb or towards a palm, while in the case of a foot, these relevant channels can be channels that point towards a toe- or a footprint.

The weight of each of the *C* channels described above can be calculated by Gradient-Weighted Class Activation Mapping by using the following formula: ${w}_{c} = mean \left(max\left({G}_{c}, 0\right)\right)$ (1) where ***G**_{c}* corresponds to a gradient, which can be calculated as the derivative of the scalar output, i.e. the global dissimilarity score with respect to a content ***O***_{c} of a channel *c*. In this way, for all channels, a respective weight can be determined. The thus-obtained channel weights can be expressed in a vector representation {*w_{c}*}_{*c*=1}*_{,...,C}.*

The heatmap can then be derived based on the linear combination of the content of channels ***O***_{c} of the respective layer of the convolutional network multiplied by the respective weight *w_{c}* as determined by the Gradient-weighted Class Activation Mapping. Specifically, the heatmap can be calculated by using the formula: $H = max \left({w}_{1}{O}_{1}+…+{w}_{C}{O}_{C},0\right)$ (2)

The thus-determined heatmap determined by Gradient-weighted Class Activation Mapping provides an indication about which parts of the input image are most helpful to discriminate the input image from the *N* images of the general population represented by the reference images with respect to the global dissimilarity score. As biometric features are typically unique for a specific person, these features allow for discriminating between different persons and should therefore be highlighted in the determined heatmap. In case the biometric feature is, for instance, a face, it can be the eyes, the nose, the ears or the mouth that allow for a discrimination between the input image and the *N* reference images. Consequently, Gradient-Weighted Class Activation should point towards the respective regions in the image. Analogously, in case the biometric feature is a hand, a finger or a palm should be most suitable to discriminate between different hands; consequently, Gradient-Weighted Class Activation should point towards these constituents of a hand. In the case of a foot, these regions could, for instance be the toes or the sole of the foot.

If part of the biometric feature, such as an eye of a face, is occluded, the respective part of the heatmap shows no activation in this region. In this way, an occlusion of the respective part of the biometric feature can be specified.

The above described process can be performed for a number of *M* different input images. This way, a number of *M* sets of weights {*w_{c}*}_{*c=*1}*,...,_{C}* can be calculated for each of the *M* input images, which yields a number of *M C*-dimensional vectors, whereby each vector comprises the weights determined for one of the *M* input images and the number of *N* reference images. It can be shown that the *C*-dimensional vectors for the number of *M* different input images are essentially similar to each other, which justifies the calculation of an average representation for the channel weights {*ŵ_{c}*}_{*c*=1,...,*C*}. This average vector representation {*ŵ_{c}*} may be calculated by averaging the *M* vectors {*w_{c}*} after normalizing their L² norm to 1.

In the following process and specifically when obtaining the heatmap in step 103 of the embodiment discussed in the context of Fig. 1, the thus- determined averaged weights {*ŵ_{c}*} can be fixed and used for the determination of a heatmap ***Ĥ***. By using these fixed weights, the heatmap ***Ĥ*** of an image can be determined without using backpropagation, where the Gradient-Weighted Class Activation Mapping backpropagates from the scalar output, i.e. the dissimilarity score, to a specific convolutional layer to quantify the weights of the different channels of this layer. Such backpropagation is only necessary during the above described training process of the weights {*ŵ_{c}*}. This allows the determination of the heatmap ***Ĥ*** when using the computer-implemented method 100 according to the embodiment of Fig. 1 in interference mode in a production environment, where backpropagation is typically not available.

Specifically, the heatmap ***Ĥ*** can be derived based on the fixed averaged weights {*ŵ_{c}*} by using the formula: $\hat{H} = max \left({\hat{w}}_{1}{O}_{1}+…+{\hat{w}}_{c}{O}_{c},0\right)$ (3)

It was found that the heatmap ***Ĥ*** that is derived based on the fixed weights has the same behavior as a heatmap *H* derived during training when applied to a specific image comprising occlusions. Consequently, also the heatmap ***Ĥ*** is particularly suitable for determining occlusions in an image without the need of backpropagation. Determining occlusions as described in step 104 of the embodiment of Fig. 1 can, for instance, comprise determining whether the image or the biometric feature comprised in the image comprises an occlusion or not.

It is furthermore conceivable that in step 104 of the computer-implemented method of Fig. 1 it is not only determined from the heatmap ***Ĥ*** as to whether an image or the biometric feature comprised in the image comprises an occlusion or not, but also to derive from the heatmap ***Ĥ*** a level of occlusion for specific parts of the image or for specific parts of the biometric feature comprised in the image. In case the biometric feature is a face, for instance, a degree of occlusion of the right eye, the left eye, the nose or the mouth can be determined.

The level of occlusion can, for instance, be determined based on the formula: ${P}_{Occlusion} = sigmoid \left(\sum \left(A⊗\hat{H}\right)+b\right)$ (4) where ⊗ denotes the element-wise product, ***A*** is a trained matrix having the same size as ***Ĥ*** and *b* is a trained bias term.

***A*** and b can be trained by minimizing the binary cross-entropy of ***P***_{Occlusion} with respect to occlusion labels of training images, whereby a label of 0 can mean that the biometric feature is occluded and a label of 1 can mean that the biometric feature is not occluded. In case the biometric feature is a face, a number of classifiers can, for instance, be trained with respect to an occlusion of one of the eyes, to an occlusion of a nose, to an occlusion of a mouth, to an occlusion of a left side of the face, to an occlusion of the right side of the face, to an occlusion of the top part of the face, or to an occlusion of the bottom part of the face.

After training of the classifiers, a trained matrix ***A**ₙ* as well as a trained bias term *bₙ* can thereby be assigned to a particular classifier *Cₙ*.

As the outputs of the classifiers *Cₙ* can be easily expressed in terms of relatively simple tensor operations, these outputs can be added as extra output to the neural network described in the context of Fig. 1, which is trained to convert an image or a biometric feature comprised in an image into an embedding, without the need to provide additional dedicated computing resources. This makes the neural network described in the context of Fig. 1 particularly suitable for being implemented on mobile computing devices, such as smartphone or tablets, with limited computational resources.

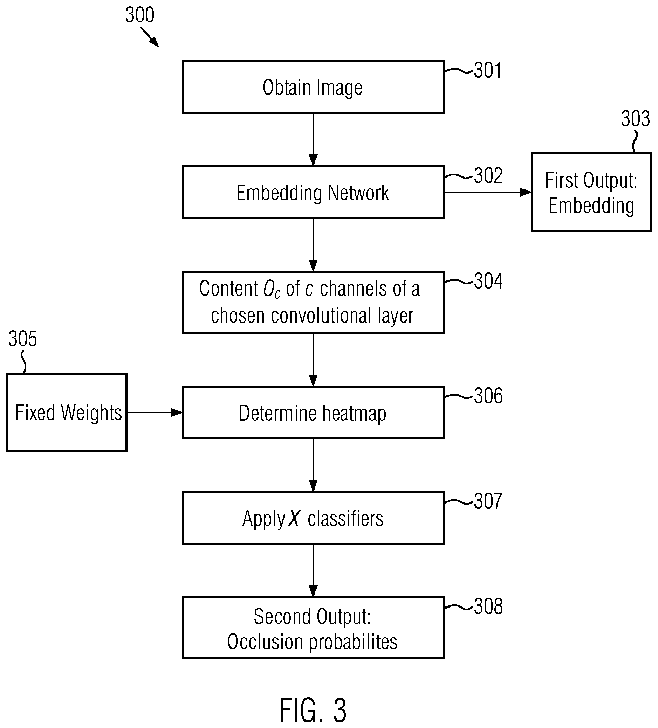

This process is subsequently described in the context of Fig. 3, which shows a computer-implemented method 300 for determining levels of occlusion in an image according to an embodiment.

As already described in the context of the embodiment of Fig. 1, initially an image comprising a biometric feature can be obtained 301. After an optional preprocessing of the image, as explicitly described in the context of the embodiment of Fig. 1, the image can be provided to the embedding neural network 302.

The embedding neural network 302 can then provide an embedding of the image or the biometric feature comprised in the image as a first output 303. This embedding may be used in a further process, such as an identification process. In order to evaluate whether this embedding is suitable to be used in the desired process, such as an identification process, the embedding network 302 may provide a second output that comprises information about probabilities for occlusions being present in the image or the biometric feature comprised in the image.

To derive this second output, the contents ***O**_{c}* 304 of channels *c* of a chosen convolutional layer of the neural network can be provided by the embedding network. Based on the contents ***O**_{c}* of the channels *c* of the chosen layer of the neural network and the fixed averaged weights {*ŵ_{c}*}_{*c=*1}*,...,_{C}* 305 a heatmap ***Ĥ*** 306 of the image or the biometric feature comprised in the image can be determined by Gradient-Weighted Class Activation without backpropagation according to equation (3) as provided in the context of the embodiment of Fig. 2. For details regarding the determination of the fixed weights {*ŵ_{c}*}, reference is made to the embodiment of Fig. 2, where the determination process has been explicitly discussed.

In a following step 307, classifiers that are trained to detect from the heatmap a degree of occlusion of specific parts of the biometric feature can be applied to the heatmap. These classifiers can provide as a second output 308 occlusion probabilities for specific types of occlusions. In case the biometric feature is a face, these occlusion probabilities can, for instance, comprise a probability for the left or the right eye to be occluded, a probability for the nose being occluded, a probability for the mouth being occluded, a probability for the left side or the right side of the face being occluded and/or a probability for the bottom or the top part of the face being occluded. The respective occlusion probabilities can be provided as a second output in the form of a vector.

Alternatively, it can also be provided that instead of the occlusion probabilities, a binary output is provided as a second output 308, which indicates whether the image or the biometric feature comprised in the image comprises an occlusion or not.

If the second output indicates that at least part of the biometric feature is occluded, the image can be rejected as invalid and/or information can be provided to a user that the image comprises occlusions. Providing information to the user can comprise providing the determined occlusion probabilities 308 to the user. If information is provided to the user indicating that the image comprises occlusions, also the embedding derived as a first output 303 of the neural network may optionally be provided to the user. The user may then decide whether the embedding is to be used in a subsequent process, such as an identification process, or not.

If it is determined that the image does not comprise an occlusion or in case the occlusion probabilities are below a threshold, the embedding provided as a first output 303 may be provided to a user or be used in a further process, such as an identification process.

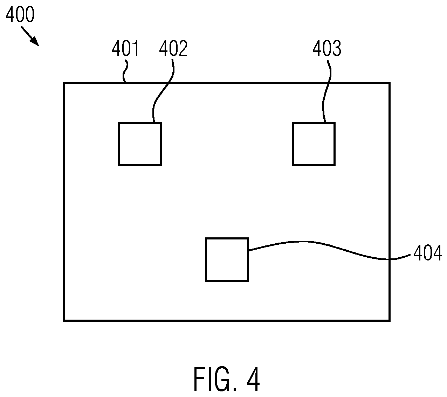

Fig. 4 shows a computing device 400 that is adapted to perform the method as discussed in the embodiments of Figs. 1, 2 and 3.

The computing device 400 can be a stationary computing device or a mobile computing device, such as a smartphone or a tablet.

The computing device can comprise a processor 401 and a memory 402. The memory 402 can be a non-volatile memory.

It can be provided that the memory comprises instructions that, when executed by the processor 401, cause the processor to execute the computer-implemented method as described in any of the embodiments discussed in the context of Figs. 1, 2 and 3.

The computing device 400 can also comprise an optical sensor 403 that is adapted to obtain an image comprising a biometric feature. The optical sensor 403 may be a camera.

Optionally, the computing device may also comprise a communication device that allows the computing device 400 to communicate with other devices by a wireless or cable connection.

By executing the method discussed in one of the embodiments of Figs. 1, 2 and 3, the computing device 400 can be employed for determining an occlusion in an image and for determining, based on the determined occlusion, the suitability of an image or the biometric feature comprised in the image for being used in an identification process. Furthermore, the computing device 400 may be configured to perform, based on the above described evaluation of the image or the biometric feature comprised in the image, an identification of a user.

## Claims

1. Computer-implemented method for determining an occlusion in an image, comprising the steps:
- obtaining the image, wherein the image comprises a biometric feature;
- processing the image by a neural network, wherein the neural network comprises a plurality of convolutional layers;
- obtaining a heatmap from an intermediate output of the neural network, wherein the intermediate output is obtained after one of the convolutional layers;
- determining an occlusion based on the heatmap;
- providing an output based on the determined occlusion, wherein if the output indicates that at least part of the biometric feature is occluded, rejecting the image as invalid and/or providing information to a user that the image comprises occlusion.

2. Computer-implemented method according to claim 1, wherein the biometric feature is a face or a part of a face, a hand or a part of hand or a foot or a part of a foot.

3. Computer-implemented method according to claim 1 or 2, wherein the heatmap is determined based on Gradient-weighted Class Activation Mapping.

4. Computer-implemented method according to claim 3, wherein the neural network is a trained neural network, wherein the neural network is trained to convert the biometric feature into an embedding, wherein after the training of the neural network, weights *w_{c}* of a number *c* of channels of a convolutional layer of the neural network are determined.

5. Computer-implemented method according to claim 4, wherein determining the weights *w_{c}* comprises applying the Gradient-weighted Class Activation Mapping to a scalar determined based on at least one input image comprising a biometric feature and on a number of *N* reference images comprising the biometric feature and no occlusion.

6. Computer-implemented method according to claim 5, wherein determining the scalar comprises calculating a dot product between an embedding of the at least one input image and an embedding of at least one of the number of *N* reference images to obtain at least one similarity score, averaging the at least one similarity score and multiplying the averaged similarity score by -1 to obtain a dissimilarity score.

7. Computer-implemented method according to claim 6, wherein an average channel weight {*ŵ_{c}*} is determined by averaging over a number of *M* weights {*w_{c}*} determined for a number of M input images.

8. Computer-implemented method according to claim 7, wherein the heatmap is obtained based on the average channel weights {*ŵ_{c}*} and the content of a channel ***O**_{c}* based on the relation ***Ĥ*** = max(*ŵ*₁***O***₁ + ··· + *ŵ_{c}**O**_{c},* 0)*.*

9. Computer-implemented method according to one of claims 1 to 8, wherein the heatmap ***Ĥ*** is obtained without using backpropagation.

10. Computer-implemented method according to one of claims 1 to 9, wherein determining the occlusion comprises determining a level of occlusion based on at least one trained binary classifier, wherein the trained binary classifier is trained based on at least one training image comprising a non-occluded biometric feature and at least one training image comprising an occluded biometric feature.

11. Computer-implemented method according to claim 10, wherein the at least one binary classifier determines the level of occlusion of a part of the biometric feature as ***P***_{Occlusion} *=* sigmoid(Σ(***A*** ⊗ ***Ĥ***) + *b*), where ⊗ denotes the element-wise product, ***A*** is a trained matrix having the same size as ***Ĥ*** and b is a trained bias term.

12. Computer-implemented method according to claim 10 or 11, wherein ***A*** and *b* are trained by minimizing the binary cross-entropy of ***P***_{Occlusion} with respect to a binary occlusion label of at least one test image, wherein the binary classifiers are applied to the heatmap to determine occlusion probabilities for each classifier.

13. Computer-implemented method according to claim 11 or 12, wherein the binary classifiers are trained for a biometric feature of a face, such as a left eye, a right eye, a nose, a mouth, a left side of the face, a right side of the face, a top part of a face or a bottom part of a face, for a biometric characteristic of a hand, such as a palm print or a fingerprint, or for a biometric characteristic of a foot, such as footprint or a toeprint.

14. Computing device comprising a processor, a memory device and an image sensor, wherein computer readable instructions are stored on the memory device, which when executed cause the computing device to perform the method according to any of claims 1 to 13.

15. Computing device according to claim 14, wherein the computing device is a mobile computing device.
